Europäisches Patentamt

European Patent Office

Office européen des brevets

(11) Veröffentlichungsnummer: **0 272 537 B1**

(12) **EUROPÄISCHE PATENTSCHRIFT**

(45) Veröffentlichungstag der Patentschrift: **25.09.91**

(51) Int. Cl.⁵: **G11B 23/087**

(21) Anmeldenummer: **87118120.2**

(22) Anmeldetag: **08.12.87**

(54) **Magnetbandcassette.**

(30) Priorität: **19.12.86 DE 3643457**

(43) Veröffentlichungstag der Anmeldung:
**29.06.88 Patentblatt 88/26**

(45) Bekanntmachung des Hinweises auf die
Patenterteilung:
**25.09.91 Patentblatt 91/39**

(84) Benannte Vertragsstaaten:
**DE FR GB**

(56) Entgegenhaltungen:
EP-A- 0 052 479       EP-A- 0 150 987
EP-A- 0 180 759       DE-A- 3 302 392
FR-A- 2 508 223       GB-A- 2 152 009
US-A- 4 021 006

(73) Patentinhaber: **BASF Magnetics GmbH**
**Gottlieb-Daimler-Strasse 10**
**W-6800 Mannheim(DE)**

(72) Erfinder: **Breuer, Rudolf, Ing. grad.**
**Fleckhammer Strasse 40**
**W-8000 München 21(DE)**
Erfinder: **Brunner, Hubert**
**Mühlgasse 4a**
**W-8911 Weil(DE)**
Erfinder: **Liepold, August, Ing. grad.**
**Kaltnerweg 2**
**W-8000 München 70(DE)**
Erfinder: **Pertzsch, Albert, Dipl.-Ing.**
**Leutstettener Strassse 29**
**W-8000 München 70(DE)**
Erfinder: **Zeroni, Ludwig, Ing. grad.**
**Nelkenstrasse 40**
**W-8012 Ottobrunn(DE)**

(74) Vertreter: **Münch, Volker et al**
**BASF Aktiengesellschaft Patentabteilung-C6**
**ZSP/A**
**W-6700 Ludwigshafen(DE)**

## Beschreibung

Die Erfindung betrifft eine Magnetbandcassette, insbesondere eine Magnetbandcassette mit Verschlußelementen für das Magnetband, durch welche die in der Stirnseite der Cassette gebildete Öffnung sowie die in der Cassettenunterseite gebildeten Ausschnittbereiche der Spulenwellen-Einführungsöffnungen wirksam verschlossen sind.

Cassetten dieser Art sind beispielsweise aus den DE-OS 34 46 990, 35 07 991, 35 37 646, EP 0 160 822 und GB 2 165 819 bekannt. Eine derartige Magnetbandcassette ist in Figur 1 perspektivisch dargestellt. Die Cassette besteht aus einer oberen Gehäusehälfte (1), die eine Rückwand (2), zueinander parallel verlaufende Seitenwände (3) und eine rechteckige Deckplatte aufweist. In der Mitte der Deckplatte ist eine Fensteröffnung (4) vorgesehen, die in Längsrichtung verläuft. Durch diese kann der Wickelzustand des Magnetbandes beobachtet werden. Eine untere Gehäusehälfte (5) enthält im mittleren Teil der zugehörigen unteren Bodenplatte symmetrisch zueinander zwei Öffnungen (14), in die die Antriebswellen des Recorders für die Spulen (6a, 6b) eingesetzt werden. Die Seitenwände und Rückwände der oberen und unteren Gehäusehälften sind in der Höhe im wesentlichen gleich. Werden die oberen und unteren Gehäusehälften aufeinander montiert, so bildet sich dazwischen ein Gehäuseraum. Die zum Aufwickeln und Abwickeln des Magnetbandes (7) dienenden Spulen (6a, 6b) sind symmetrisch zueinander im mittleren Bereich dieses Gehäuseraumes angeordnet. An den oberen oder unteren Endbereichen der Naben sind Verzahnungen vorgesehen. Zu beiden Seiten der Spulen sind Gleitfolien (8a, 8b) angeordnet, damit ein leichtes Gleiten des Magnetbandes gewährleistet ist. Eine Spulenbremse (9) greift in die Verzahnungen der Naben ein. Der nach der Montage zwischen den oberen und unteren Gehäusehälften gebildete offene Raum (10) wird durch eine Frontklappe (11) verschlossen, um das Eindringen von Staub in das Cassettengehäuse zu verhindern. In den offenen Raum tauchen nicht gezeichnete Antriebsmittel einer Bandantriebsvorrichtung ein. Die Frontklappe besteht aus einer länglichen Frontfläche mit einem leicht nach oben gebogenen Abschnitt und an beiden Enden angeordneten Seitenlaschen (12). Die Frontklappe ist an dem Cassettengehäuse durch von den Innenflächen der Seitenlaschen abstehende Lagerstifte (13) schwenkbar gelagert. Zum Abdecken des offenen Raumes der unteren Gehäusehälfte ist ein Schieber (15) vorgesehen, um das Eindringen von Staub durch die Öffnungen (14) zu verhindern. Der Schieber weist parallel zueinander verlaufende Seitenwände (16) gleicher Höhe auf sowie eine rechteckförmige Platte zur Verbindung der beiden Seitenwände. Im mittleren Bereich des Schiebers sind symmetrisch zueinander Öffnungen (17) vorgesehen, durch die die recorderseitigen Antriebswellen zu den Spulennaben durchgreifen können, wenn sich der Schieber bei Offenstellung der Magnetbandcassette in der hinteren Position befindet. Durch eine (nicht gezeichnete) Feder, deren abgebogenes Ende in dem Pfosten (23) an der unteren Gehäusehälfte befestigt ist und deren freies Ende am Vorsprung (19) am Schieber sitzt, wird dieser vorgespannt. Eine andere Ausführung, welche in der bereits genannten DE-OS 35 07 991 beschrieben ist, sieht zur Vorspannung des Schiebers eine Schraubenfeder vor, deren vorderer Teil sich an einem Vorsprung im Cassettenteil und deren hinterer Teil sich an einem Vorsprung des Schiebers abstützt und die in einem der unteren Gehäusehälfte vorgesehenen Schlitz geführt wird.

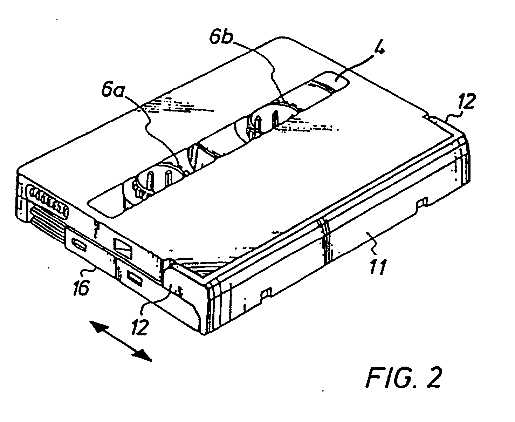

Bei einer derartigen Magnetbandcassette ist, wie dies Figur 2 veranschaulicht, bei Nichtgebrauch der Frontteil des Cassettengehäuses durch die Frontklappe (11) geschlossen, und der Schieber ist derart gleitbar nach vorn geschoben, daß der Ausschnittbereich der Spulenwellen-Einführungsöffnungen (14) durch den in Pfeilrichtung gleitbaren Schieber verschlossen sind. Damit ist das Magnetband in dem Cassettengehäuse vollständig abgeschirmt.

Aus dem vorstehend Aufgeführten geht aber auch hervor, daß bei Inbetriebnahme der Cassette sowohl die Frontklappe wie auch der Schieber betätigt werden müssen, was durch entsprechende recorderseitige Mittel geschieht.

Die EP 0 150 987 setzte sich zum Ziel, die Betätigung der Frontklappe und des Schiebers der Magnetbandcassette miteinander zu koppeln, was durch zwei beiderseitig am Schieber angebrachte Zahnstangen bewirkt wird, in die mit der Frontklappe verbundene Zahnradsegmente eingreifen. Eine derartige Magnetbandcassette ist jedoch schwierig herzustellen und zu montieren, da die Zuordnung Zahnstange und Zahnradsegment beim Zusammenfügen Probleme bereitet.

Der vorliegenden Erfindung liegt deshalb die Aufgabe zugrunde, eine Magnetbandcassette der im Oberbegriff der Ansprüche 1 und 4 genannten Art zu schaffen, bei der cassettenseitig die Betätigung der Frontklappe und des Schiebers miteinander gekoppelt ist, die dabei einfach herzustellen und zu montieren ist und die eine geringe Bauhöhe in geschlossenem wie in geöffnetem Zustand aufweist.

Die Aufgabe wurde gemäß der vorliegenden Erfindung mit einer Magnetbandcassette mit den im kennzeichnenden Teil der Ansprüche 1 und 4 aufgeführten Merkmalen gelöst. Nähere Einzelheiten gehen aus der Beschreibung und den Zeichnungen hervor.

Die Erfindung wird nun anhand der Zeichnungen näher erläutert, und zwar zeigt

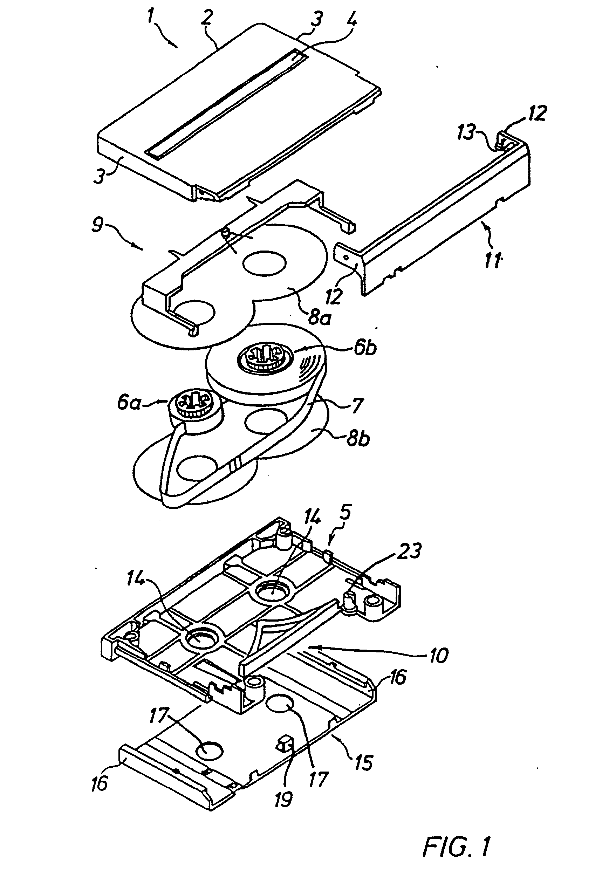

Figur 1 eine explosionsartige Darstellung einer konventionellen Magnetbandcassette

Figur 2 eine perspektivische Darstellung einer konventionellen Magnetbandcassette im geschlossenen Zustand

Figur 3 - 5 die Seitenansicht mehrerer Ausführungsformen der erfindungsgemäßen Cassette, jeweils im geöffneten Zustand

Figur 6 - 8 die zu Figur 3 - 5 entsprechenden Seitenansichten jeweils im geschlossenen Zustand der Cassette.

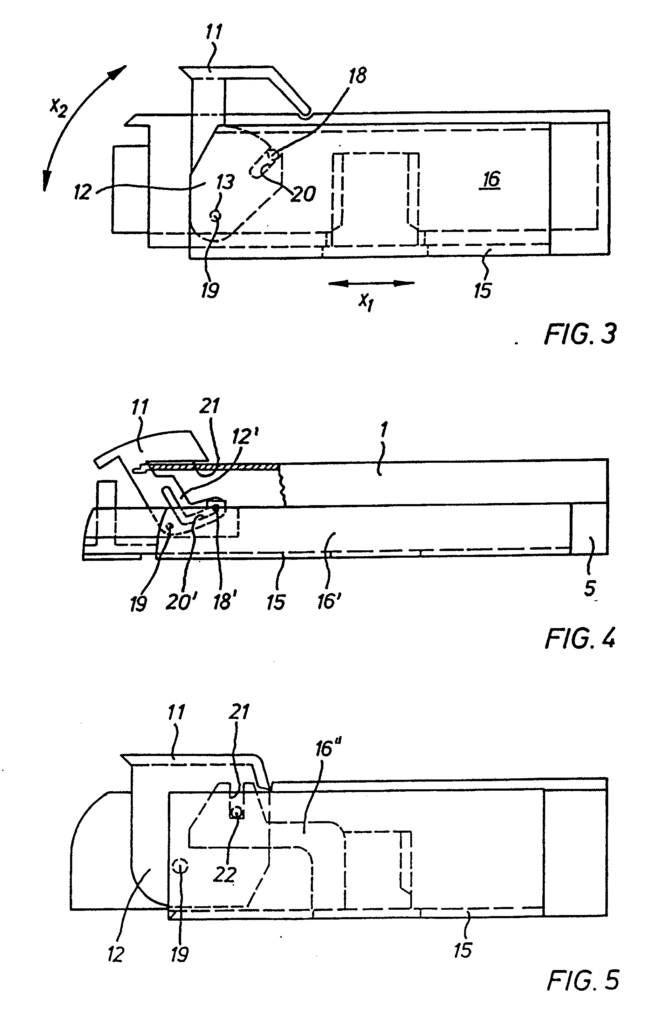

Figur 3 stellt die Seitenansichten einer Ausführungsform der erfindungsgemäßen Anordnung in geöffnetem Zustand der Magnetbandcassette dar. Die Seitenwand (16) des Schiebers (15) enthält vorzugsweise in ihrem oberen Teil einen nach innen weisenden Führungszapfen (18). Die weiter innen, parallel zur Seitenwand (16), angeordnete Seitenlasche (12) der Frontklappe (11), welche durch die Zapfen (13) wie bereits geschildert um den Drehpunkt (19) schwenkbar gelagert ist, besitzt an ihrem zum abgebogenen Teil der Frontklappe weisenden Ende eine Ausnehmung (20), in die der Führungszapfen (18) eingreift. Die Ausnehmung (20) kann als durchgehender Schlitz oder auch als Nut gestaltet sein.

Die Länge und Position der Ausnehmung ist so bemessen, daß durch sie der Führungszapfen im vollen Schwenkbereich X2, beispielsweise von 90°, der Frontklappe geführt wird. Auf diese Weise wird eine einfach herzustellende Kopplung der Gleitbewegung des Schiebers in Pfeilrichtung X1 und der Schwenkbewegung der Frontklappe X2 geschaffen.

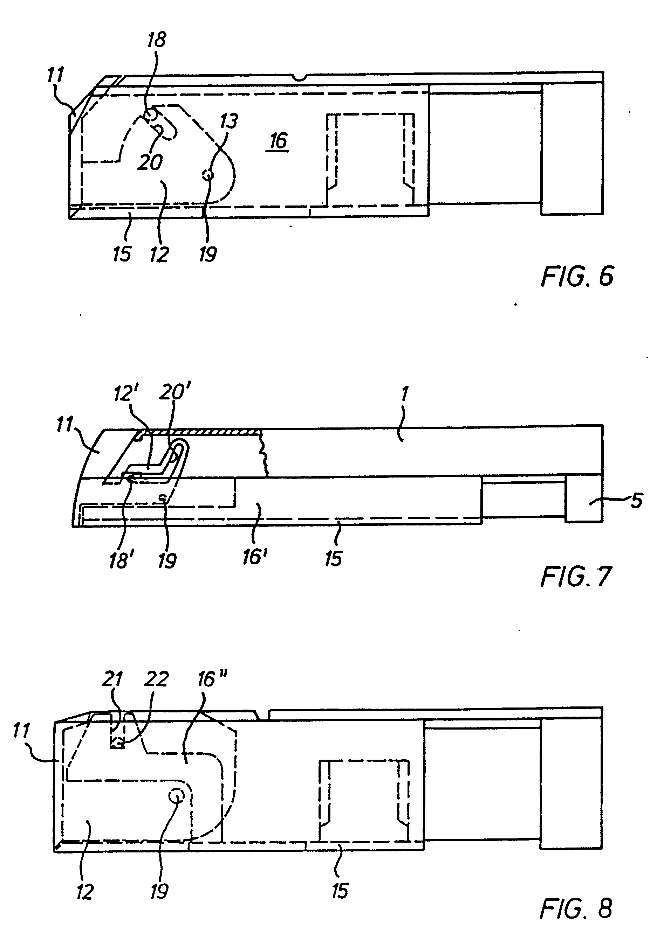

Figur 6 zeigt die entsprechende Seitenansicht der gleichen Magnetbandcassette im geschlossenen Zustand.

In Figur 4 und Figur 7, in denen wiederum eine Seitenansicht der Magnetbandcassette in geöffnetem beziehungsweise geschlossenem Zustand zu sehen ist, wird eine abgewandelte Ausführungsform der Erfindung dargestellt. Dabei ist die Seitenwand der Frontklappe in der Form einer abgewinkelten Lasche (12') ausgebildet, welche mit einem ebenfalls abgewinkeltem Schlitz (20') versehen ist. Der Schlitz verläuft in seinem vorderen, der Frontklappe zugewandten Teil in geschlossenem Cassettenzustand waagrecht, das heißt parallel zur Verbindungslinie von oberer und unterer Cassettenhälfte. Der hintere Teil verläuft schräg nach oben gekrümmt, ungefähr parallel zu dem oberen gebogenen Teil der Frontklappe, jedoch mit einem diesem Teil vorzugsweise entgegengesetzten Krümmungsverlauf. Bei dieser Ausführungsform wird bevorzugt, wie aus Figur 4 zu ersehen, die Frontklappe nicht um 90°, sondern lediglich um etwa 60° geöffnet, wobei als Anschlag auf der Oberseite der oberen Gehäusehälfte (1) die Rückseite (21) des oberen Frontklappenteils dient.

Vorteilhaft ist bei dieser Konstruktion, daß die Bauhöhe des Schiebers (15) gering gehalten werden kann, da sie mit Ausnahme des Bereiches des die Frontklappe steuernden Zapfens (18') lediglich die Höhe der unteren Cassettenhälfte (5) erreicht. Der weitere Vorteil besteht darin, daß die Einheit Schieber-untere Cassettenhälfte-Frontklappe in einfacher Weise vormontiert werden kann und auf diese Einheit dann die obere Cassettenhälfte aufgebracht wird.

Eine weitere erfindungsgemäße Lösung der gestellten Aufgabe ist in Figur 5 und 8 dargestellt. Die Seitenwand des Schiebers besteht hier im wesentlichen aus einer gegebenenfalls mehrfach gewinkelten Lasche (16'), an deren oberen Ende sich die Ausnehmung (21) befindet, die bevorzugt senkrecht nach oben weist. Für die Art der Ausnehmung (21) gilt das gleiche wie für die Art der Ausnehmung (20). Das Seitenteil (12) der Frontklappe (11) hat vorzugsweise in seinem oberen Teil einen nach außen weisenden Führungszapfen (22), welcher in die Ausnehmung (21) der außen liegenden Lasche (16') eingreift und auf diese Weise die Koppelung zwischen Frontklappe und Schieber besorgt. Auch bei dieser Lösung ist selbstverständlich die Position und Dimensionierung der Ausnehmung so geschaffen, daß der die Schwenkbewegung der Frontklappe mitmachende Führungszapfen sich in jeder Position in der Ausehmung (21) befindet.

Die vorstehend genannten erfindungsgemäßen Merkmale wie Laschen, Ausnehmungen und Führungszapfen können nur an einem Seitenteil der Cassette, jedoch in bevorzugter Ausführung an beiden Seitenteilen vorhanden sein.

Bei allen Ausführungen der erfindungsgemäßen Cassette befindet sich der Drehpunkt (19) der Frontklappe bevorzugt unterhalb der geometrischen Mitte, in einer besonders bevorzugten Ausführung im unteren Drittel des Cassettenseitenteils. Allen Ausführungsformen gemeinsam ist eine geringe Bauhöhe der Cassette auch im geöffneten Zustand, wozu auch mithilft, daß der obere abgewinkelte Teil der Frontklappe in einem Spalt (Figur 3) beziehungsweise einer Kante (Figur 5) der oberen Cassettenhälfte sitzt.

Die beiden ersten vorstehend beschriebenen Ausführungsformen unterscheiden sich dadurch von der dritten Konstruktion, daß bei ihnen die Seitenwand des Schiebers den nach innen weisenden Führungszapfen trägt und die Seitenwand der Frontklappe eine Ausnehmung besitzt, während bei der dritten Ausführung die Seitenwand der Frontklappe mit dem nach außen weisenden Führungszapfen ausgerüstet ist, der in einer Ausnehmung der Seitenwand beziehungsweise Seitenlasche des Schiebers eingreift. Die Reihenfolge der Wandungen (vom Cassetteninnern nach außen) ist bei allen Ausführungsformen bevorzugt Cassettenseitenwand-Seitenwand Frontklappe-Seitenlasche Schieber. Jedoch ist auch, falls es aus Konstruktionsgründen erforderlich ist, eine andere Reihenfolge der Wandungen oder eine andere Form der Ausnehmungen der Laschen oder der Frontklappe denkbar, ohne damit den Geist der Erfindung zu verlassen.

## Patentansprüche

1. Magnetbandcassette mit einem aus einer oberen und einer unteren Gehäusehälfte (1, 5) bestehenden Gehäuse und einem an der Vorderseite angeordneten offenen Raum (10), mit zwei in dem Gehäuse angeordneten Spulen (6a, 6b), auf die ein im Gehäuse angeordnetes Magnetband (7) aufgewickelt ist, mit einer schwenkbaren Frontklappe (11) mit Seitenlaschen (12), die den offenen Raum (10) abdeckt, und deren an den Laschen ausgebildete Drehpunkte Zapfen (13) sind, die in den Seitenwänden des Gehäuses verankert sind, mit einem auf der Unterseite des Cassettengehäuses vorhandenen, zum Abdecken der Wickelantriebswellen-öffnungen die nenden Schieber (15) mit Seitenwänden (16), der in Vorwärts- und Rückwärtsrichtung in Führungen der Cassettenseitenteile frei gleitbar ist und wobei die Schwenkung der Frontklappe mit der Gleitbewegung des Schiebers durch einen in der Cassette vorhandenen Mechanismus gekoppelt ist, dadurch gekennzeichnet, daß die Seitenlasche (12′) der Frontklappe (11) eine Ausnehmung (20′), besitzt, in die ein Führungszapfen (18′) eingreift, welcher von der Seitenwandung (16′) des Schiebers ausgeht.

2. Magnetbandcassette nach Anspruch 1, dadurch gekennzeichnet, daß die Ausnehmung (20) der Seitenlasche einen geraden Verlauf hat und in Richtung des oberen Endes der Frontklappe verläuft.

3. Magnetbandcassette nach Anspruch 1, dadurch gekennzeichnet, daß die Ausnehmung (20′) der Seitenlasche (12′) einen gewinkelten Verlauf hat, wobei der vordere Teil der Ausnehmung, welcher benachbart der Frontklappe ist, im geschlossenen Cassettenzustand parallel zur Verbindungslinie von oberer und unterer Cassettenhälfte und wobei der hintere Teil der Ausnehmung schräg nach oben gekrümmt verläuft.

4. Magnetbandcassette mit einem aus einer oberen und einer unteren Gehäusehälfte (1, 5) bestehenden Gehäuse und einem an der Vorderseite angeordneten offenen Raum (10), mit zwei in dem Gehäuse angeordneten Spulen (6a, 6b), auf die ein im Gehäuse angeordnetes Magnetband (7) aufgewickelt ist, mit einer schwenkbaren Frontklappe (11) mit Seitenlaschen (12), die den offenen Raum (10) abdeckt, und deren an den Laschen ausgebildete Drehpunkte Zapfen (13) sind, die in den Seitenwänden des Gehäuses verankert sind, mit einem auf der Unterseite des Cassettengehäuses vorhandenen, zum Abdecken der Wickelantriebswellenöffnungen die nenden Schieber (15) mit Seitenwänden (16), der in Vorwärts- und Rückwärtsrichtung in Führungen der Cassettenteile gleitbar ist und wobei die Schwenkung der Frontklappe mit der Gleitbewegung des Schiebers durch einen in der Cassette vorhandenen Mechanismus gekoppelt ist, dadurch gekennzeichnet, daß am Schieber (15) eine gegebenenfalls mehrfach gewinkelte Lasche (16″) angespritzt ist, welche parallel zu den Cassettenseitenteilen angeordnet ist und deren oberes Ende eine Ausnehmung (21) aufweist, in die ein Führungszapfen (22) eingreift, welcher von der die Drehpunkte (19) der Frontklappe (11) enthaltenden seitlichen Lasche (12) ausgeht.

5. Magnetbandcassette nach den Ansprüchen 1 bis 4, dadurch gekennzeichnet, daß sich der Drehpunkt (19) der Frontklappe (11) unterhalb der geometrischen Mitte der Cassettenseitenteile befindet.

6. Magnetbandcassette nach einem oder mehreren der Ansprüche 1 bis 5, dadurch gekennzeichnet, daß das obere Ende der Frontklappe (11) im geöffneten Cassettenzustand mindestens in einem Punkt an der Außenseite der oberen Gehäusehälfte liegt.

## Claims

1. A magnetic tape cassette having a housing comprising an upper housing half (1) and a lower housing half (5) and an open space (10) arranged on the front side, having two reels (6a, 6b) arranged in the housing and onto which is wound a magnetic tape (7) arranged in the housing, having a pivotal front flap (11) with side lugs (12), which covers over the open space (10) and the pivot points of which, formed on the lugs, are pegs (13) which are anchored in the side walls of the housing, having a slide (15) with side walls (16), which is on the underside of the cassette housing, serves for covering over the winding drive shaft openings and is able to slide freely in forward direction and backward direction in guides of the cassette side parts, and in which cassette the pivoting of the front flap is coupled to the sliding motion of the slide by a mechanism provided in the cassette, wherein the side lug (12') of the front flap (11) has a recess (20') into which there engages a guide peg (18') which extends from the side wall (16') of the slide.

2. A magnetic tape cassette as claimed in claim 1, wherein the recess (20) of the side lug follows a straight path and runs in the direction of the upper end of the front flap.

3. A magnetic tape cassette as claimed in claim 1, wherein the recess (20') of the side lug (12') follows an angled path, the front part of the recess, adjacent to the front flap, running parallel to the line joining the upper cassette half and the lower cassette half, when the cassette is in the closed state, and the rear part of the recess running obliquely upward in a curve.

4. A magnetic tape cassette having a housing comprising an upper housing half (1) and a lower housing half (5) and an open space (10) arranged on the front side, having two reels (6a, 6b) arranged in the housing and onto which is wound a magnetic tape (7) arranged in the housing, having a pivotal front flap (11) with side lugs (12), which covers over the open space (10) and the pivot points of which formed on the tabs are pegs (13) which are anchored in the side walls of the housing, having a slide (15) with side walls (16), which is on the underside of the cassette housing, serves for covering over the winding drive shaft openings and is able to slide in forward direction and backward direction in guides of the cassette side parts, and in which cassette the pivoting of the front flap is coupled to the sliding motion of the slide by a mechanism provided in the cassette, wherein a lug (16"), which may be angled in more than one place, is molded onto the slide (15), is arranged parallel to the cassette side parts and the upper end of which has a recess (21), into which there engages a guide peg (22) which extends from the side lug (12) containing the pivot points (19) of the front flap (11).

5. A magnetic tape cassette as claimed in any of claims 1 to 4, wherein the pivot point (19) of the front flap (11) is below the geometrical centre of the cassette side parts.

6. A magnetic tape cassette as claimed in one or more of claims 1 to 5, wherein, in the opened state of the cassette, the upper end of the front flap (11) lies at least at one point on the outside of the upper housing half.

**Revendications**

1. Cassette à bande magnétique, comprenant un boîtier composé de demi-boîtiers supérieur et inférieur (1, 5) et un compartiment ouvert (10) situé sur le côté avant, deux bobines (6a, 6b) qui sont montées dans le boîtier et sur lesquelles est enroulée une bande magnétique (7) disposée dans le boîtier, un volet frontal pivotant (11) qui est muni de pattes de fixation latérales (12), qui recouvre le compartiment ouvert (10) et dont les centres de rotation, formés sur les pattes de fixation, sont des pivots (13) qui sont insérés dans les parois latérales du boîtier, et un tiroir (15) qui est disposé du côté inférieur du boîtier de cassette, sert à recouvrir les ouvertures des arbres d'entraînement des bobines et présente des parois latérales (16) qui peuvent glisser librement en direction de l'avant et de l'arrière dans des guides des parties latérales de la cassette, le mouvement pivotant du volet frontal étant accouplé au mouvement coulissant du tiroir par un mécanisme prévu dans la cassette, caractérisée en ce que la patte de fixation latérale (12') du volet frontal (11) présente un évidement (20') dans lequel s'engage un tourillon de guidage (18') qui fait saillie sur la paroi latérale (16') du tiroir.

2. Cassette à bande magnétique selon la revendication 1, caractérisée en ce que l'évidement (20) de la patte de fixation latérale a un tracé en ligne droite et s'étend en direction de l'extrémité supérieure du volet frontal.

3. Cassette à bande magnétique selon la revendication 1, caractérisée en ce que l'évidement (20') de la patte de fixation latérale (12') a un tracé coudé, la partie antérieure de l'évidement, qui est voisine du volet frontal, s'étendant parallèlement à la ligne d'assemblage des demi-cassettes supérieure et inférieure dans l'état fermé de la cassette, et la partie postérieure de l'évidement s'étendant obliquement vers le haut en arc de cercle.

4. Cassette à bande magnétique, comprenant un boîtier composé de demi-boîtiers supérieur et inférieur (1, 5) et un compartiment ouvert (10) situé sur le côté avant, deux bobines (6a, 6b) qui sont montées dans le boîtier et sur lesquelles est enroulée une bande magnétique (7) disposée dans le boîtier, un volet frontal pivotant (11) qui est muni de pattes de fixation latérales (12), qui recouvre le compartiment ouvert (10) et dont les centres de rotation, formés sur les pattes de fixation, sont des pivots (13) qui sont insérés dans les parois latérales du boîtier, et un tiroir (15) qui est disposé du côté inférieur du boîtier de cassette, sert à recouvrir les ouvertures des arbres d'entraînement des bobines et présente des parois latérales (16) qui peuvent glisser librement en direction de l'avant et de l'arrière dans des guides des parties latérales de la cassette, le mouvement pivotant du volet frontal étant accouplé au mouvement coulissant du tiroir par un mécanisme prévu dans la cassette, caractérisée en ce qu'il est formé au moulage par injection, sur le tiroir (15), un patte (16") éventuellement coudée plusieurs fois, qui est disposée parallèlement aux parties latérales de la cassette et dont l'extrémité supérieure présente un évidement (21) dans lequel s'engage un tourillon de guidage (22) qui fait saillie sur la patte de fixation latérale (12) comportant les centres de rotation (19) du volet frontal (11).

5. Cassette à bande magnétique selon l'une quelconque des revendications 1 à 4, caractérisée en ce que le centre de rotation (19) du volet frontal (11) se trouve au-dessous du milieu géométrique des parties latérales de la cassette.

6. Cassette à bande magnétique selon l'une quelconque des revendications 1 à 5, caractérisée en ce qu'à l'état ouvert de la cassette, l'extrémité supérieure du volet frontal (11) est située au moins en un point sur le côté latéral du demi-boîtier supérieur.

FIG. 1

*FIG. 2*

FIG. 3

FIG. 4

FIG. 5

FIG. 6

FIG. 7

FIG. 8